# EUROPEAN PATENT SPECIFICATION

(11) **EP 3 184 352 B1**
(45) Date of publication and mention of the grant of the patent: **19.04.2023**
(21) Application number: 15202022.8
(22) Date of filing: 22.12.2015
(51) Int. Cl.: B60L 53/30, B60L 53/14, H02J 7/00, B60L 53/31, B60L 53/60

(54) **A SYSTEM AND METHOD FOR DYNAMIC PHASE-LOAD DISTRIBUTION WHEN CHARGING ELECTRICAL VEHICLES**
SYSTEM UND VERFAHREN ZUR DYNAMISCHEN PHASENLASTVERTEILUNG BEIM LADEN ELEKTRISCHER FAHRZEUGE
SYSTÈME ET PROCÉDÉ DE DISTRIBUTION DE CHARGE DE PHASE DYNAMIQUE LORS DE LA CHARGE DE VÉHICULES ÉLECTRIQUES

(43) Date of publication of application: 28.06.2017
(60) Divisional application: 22191138.1
(73) Proprietor: Zaptec IP AS, 4068 Stavanger (NO)
(72) Inventor: Stojanovic, Zoran, 4100 Jørpeland (NO); Helmikstøl, Jonas, 4120 Tau (NO); Valebjørg, Vegard, 1453 Klepp (NO); Valen, Roald, 4352 Kleppe (NO); Johansen, Brage W., 4052 Røyneberg (NO); Næsje, Kjetil, 4314 Sandnes (NO)
(74) Representative: Onsagers AS

(56) References cited:
- WO-A2-2010/089396
- WO-A2-2014/180539
- US-A1- 2015 084 434

## Description

### Technical Field

The present invention relates to a 3-phase charging assembly and more specifically to a system and method for optimal use of available electrical power, based on dynamic phase load distribution, when charging batteries for electric vehicles.

### Background and prior art

In a common prior art 3-phase charging assembly for an electric vehicle (EV), electric vehicle supply equipment (EVSE) providing power to an outlet of a charging station is permanently connected to a specific phase, causing a risk for error due to unbalance when more than three EVs are charging. Regulations require that, in the absence of a dedicated arrangement configured to avoid overload of fuses, the circuit should allow disconnection of an EVSE from a distribution line when maximum power available is used. In practise, most electricians of EVSE have to limit the number of charging spots corresponding to the number of EVSE units, or limit the maximum charging power for each EVSE unit, or to upgrade the power available for charging.

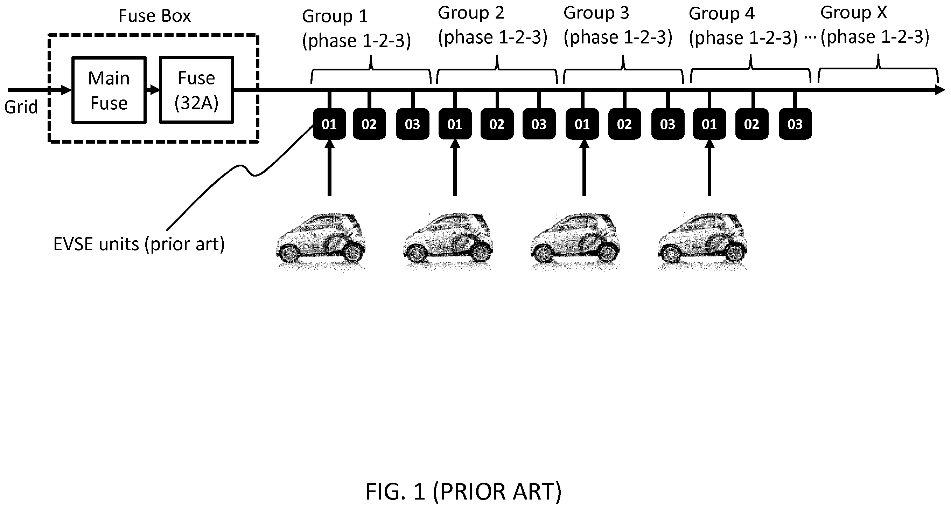

Figure 1 shows an example of a prior art system which includes four EVs being charged via a 3-phase network connected to a grid via a fuse box with fuses defining maximum power available for changing. The figure shows a total of 12 EVSE units that are connected to a 3-phase network via a common rail or distribution cable. In a worst case scenario each of the EVSE units is rigidly connected to the same phase. In a 230 V network with a rated current of 32 A, a work case scenario as shown in figure 1 will provide an EV distribution power of only 7.4 kW. Every EV may thus receive a maximum charging power of about 1800 W since any load exceeding this level would trip the fuse. Hence, due to the rigid load distribution all potential capacity provided by all phases in the circuit can not be utilized.

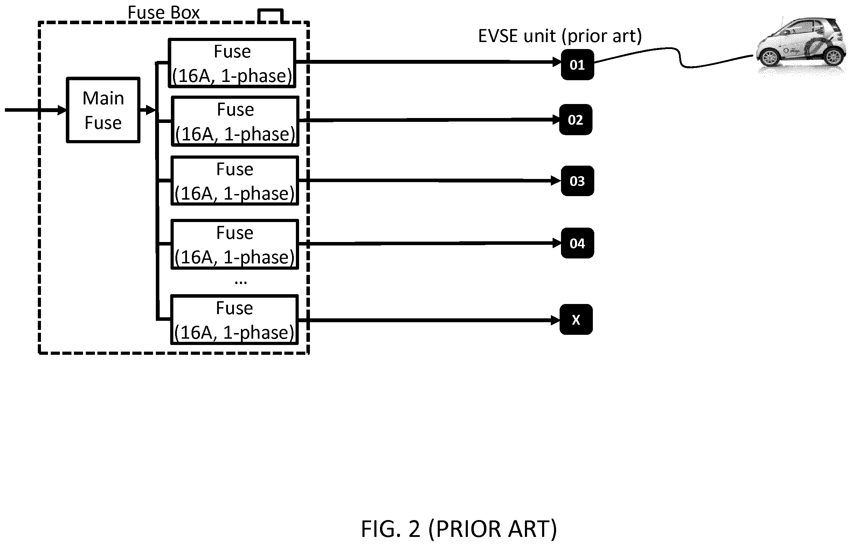

Figure 2 shows an alternative setup of several EVSE units connected to one phase (1-phase) of a 3-phase network. In contrast to the setup of figure 1 the 3-phase charging assembly comprising a 3-phase network that splits up into a number of parallel one-phase distribution lines with EVSE's connected. Such a configuration results in both an increased need for cables, as well as a significant limitation of maximum charging level for each unit. The latter is a consequence of the above mentioned regulations related to the requirement of providing sufficient power from the main supply in order to support full theoretical load.

The principle of dynamically distributing one-phase load on a 3-phase network is known. WO 2012/175332 A1 describes an example of this where a device is configured to control a switch for selecting any phase for supplying power to an electrical component. Selected phase depend on respective load of each phase in the 3-phase energy network.

Prior art solutions do however lack automatic and seamless routing of 1-phase loads and 3-phase loads over same 3-phase distribution cable for optimal load balance and use of available power, and where this is based on different information like total load on the 3-phase distribution cable, load on each phase, total power available for charging, power and time required for charging of connected EVs etc.

It is thus an object of the present invention to provide a system that renders more effective and seamless distribution and load balance of available power in a 3-phase charging assembly by ensuring that there are excess power available for quick charging when few EVs are connected, and that maximum power drawn is below maximum power available, thus representing low or no risk when many EVs are connected.

An other object of the present invention is to automatically re-route available power in the 3-phase charging assembly in order to prioritize specific needs for devices connected to the same 3-phase power supply, and/or other power requirements defined by local or regional network operators due to for example power shortage, overheating in transformers local technical problems, etc.

US2015084434 A1 discloses a switching system for switching between phases in a multi-phase power distribution system includes a switch for selectively connecting a lateral line to feeder conductors of different phases in a multi-phase power distribution system.

WO2010089396 A2 discloses a device for connecting an end user mains network to a multiple phase power distribution network in which are used relay switches R1 and R2 to connect an input 3-phase supply side (L1, L2, L3) to an output side (02) via output switching relays.

US9168839 B2 relates to a method for distributing electricity in a system comprising, inter alia, an electricity distribution network, electric vehicle recharge terminals and electric vehicles.

### Summary of the invention

The present invention is defined by the subject-matter in the main claims, while the dependent claims describe other characteristics of the invention.

Several advantageous embodiments of the 3-phase charging assembly are defined in the dependent claims.

In the following description, numerous specific details are introduced to provide a thorough understanding of embodiments of the claimed system and method. One skilled in the relevant art will however recognize that these embodiments can be practiced without one or more of the specific details, or with other components, systems, etc. In other instances, well-known structures or operations are not shown, or are not described in detail, to avoid obscuring aspects of the disclosed embodiments.

### Brief description of the drawings

Fig. 1 is a schematic showing a prior art 3-phase charging assembly, where several EVSE's are connected to a single distributing cable sharing a common 32A fuse, the latter being connected to a main fuse of a 3-phase network grid.
Fig. 2 is a schematic of a prior art 3-phase charging assembly, where several EVSE's are connected in a parallel manner to a main fuse of a 3-phase network via separate 16 A fuses.
Fig. 3 is a schematic of a 3-phase charging assembly in accordance with the invention, where several EVSE's are connected along a single distributing cable sharing a common 32 A fuse, the latter being connected to a main fuse of a 3-phase network grid.
Fig. 4 is a schematic of a 3-phase charging assembly in accordance with the invention, where groups of up to 15 EVSE's (Z) are connected to each of a plurality of distributing cables sharing common 32 A fuses, and where the plurality of common 32 A fuses are connected in a parallel manner to a main fuse of the 3-phase network grid.
Fig. 5 is a circuit diagram of a 3-phase network having a relay configuration ensuring phase-specific connection and disconnection from mains supply.
Fig. 6 is a circuit diagram of a 3-phase network having a relay configuration ensuring both phase-specific connection and disconnection from mains supply as well as re-configurations between IT, TN and TT systems.

### Detailed description of the invention

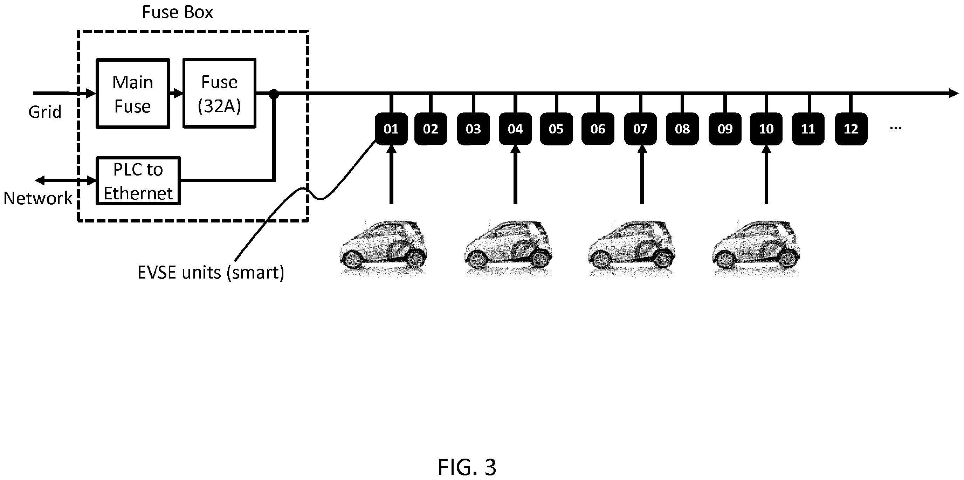

As shown in both figure 1 and figure 3, several EVSE units are connected to the same 3-phase network via a common distributing cable. However, in contrast to the prior art solution shown in figure 1 the EV's shown in figure 3 are connected to EVSE units comprising an intelligent phase distribution system according to the present invention. Based on 3-phase power measurements within each of the EVSE units and exchange of data, comprising this information, between each EVSE unit within a certain time period, it is possible to utilize each phase of the 3-phase in the most efficient way.

As an example, the first of the four EV's in figure 3 is connected to the phase having the highest available capacity measured by the EVSE that the EV is connected too. Identical power measurements are performed by the remaining EVSE's and each EV is in turn connected to the phase providing the best capacity at the time of connection.

The features of power measurements is integrated in each EVSE and information flow between each EVSE, comprising this power information, is used in an energy distribution algorithm which will be further described below. This is controlled and monitored by means of a control unit such as a power line communication (PLC) system connected to a network (e.g. wireless local area network (WLAN)) or any variation thereof. This may further be connected to the Internet ensuring remote control of energy distribution. A PLC system can be used to logically interconnect EVSE units. Instead of a PLC, a separate communication line may be used, running parallel to conventional power lines. Implementing and using the EVSE's according to the invention is the foundation for the power distribution in a 3-phase charging assembly.

After exchanging information, each EVSE will connect an EV to a specific phase of the 3-phase power lines according to the capacity and current load detected on the phase. The purpose is optimal use of the capacity of each phase of a 3-phase system.

An example of optimal use of the capacity of a 3-phase system is when the first EV receives 32 A at phase 1, a second EV receives 32 A at phase 2 and a third and fourth EV receive 16 A at phase 3, resulting in a total power of 22 kW (230 V x 32 A x 3) distributed to the connected EVs. Hence, the inventive network may deliver a total power that is about 3 times the available power in the prior art 3-phase network described earlier with reference to figure 1.

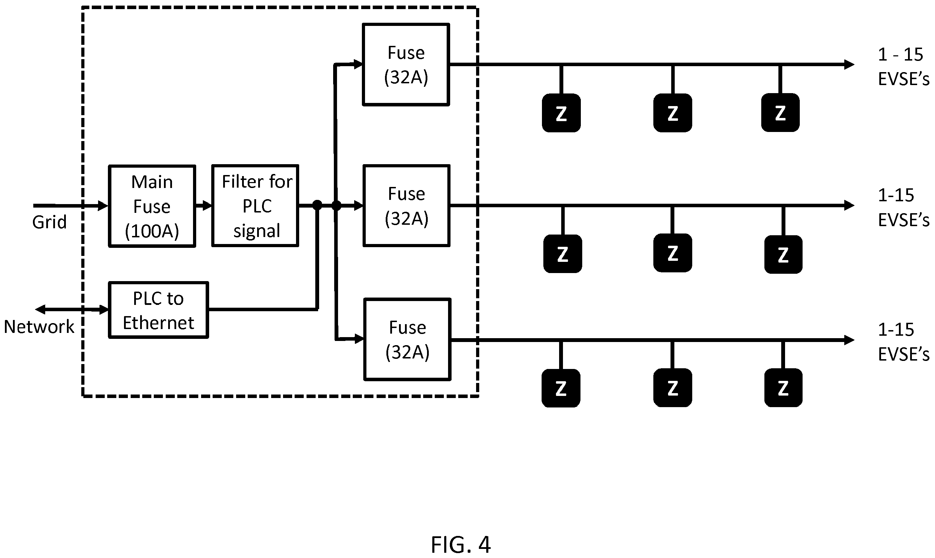

Figure 2 and figure 4 both show a network where several fuses is connected in a parallel manner to a main fuse. However, in contrast to the prior art solution shown in figure 2, the power distributed to the various EV's shown in figure 4 is controlled and optimized by the energy distribution algorithm in a similar way as described above with reference to figure 3.

In order to achieve a desired phase-specific load distribution a new system according to the invention may employ one or more of the following:
- an increased number of integrated power switches, i.e. relays and associated control electronics compared to a conventional network,
- a control system that logically interconnect most of or all EVSE units connected to the same circuit/sub-circuit sharing the same fuse,
- means for automatically identifying connection of a new EVSE to the same circuit/sub-circuit,
- means for automatically identifying replacement of an EVSE,
- means for reading energy storage capacity and present charging level of each of the connected EVs.

Examples of means for automatically identifying connection of a new EVSE may be based on pre-registered RFID (Radio Frequency Identification) or any other means for automatically identifying and tracking tags linked to objects.

Further, means for automatically identifying replacement of an EVSE may be Bluetooth, Bluetooth Low Energy or similar systems fitted in dedicated plugs or power points.

And finally, means for reading energy storage capacity and present charging level of each of the connected EVs may be PLC system or WiFi / Bluetooth or logging on to an EV over GPRS (General Packet Radio Service) or any other packet oriented mobile data service. The latter may be achieved by logging on to the EV using user name and password, if that is made available in an online profile of a user.

This will be a part of the information flow between the different EVSE's and is the basis for which phase to connect a specific EV to.

Information about energy storage capacity and charging level may also be an aid to identify specific needs during a charging procedure, and will thus be a parameter when setting up priority rules in the above mentioned energy distribution algorithm.

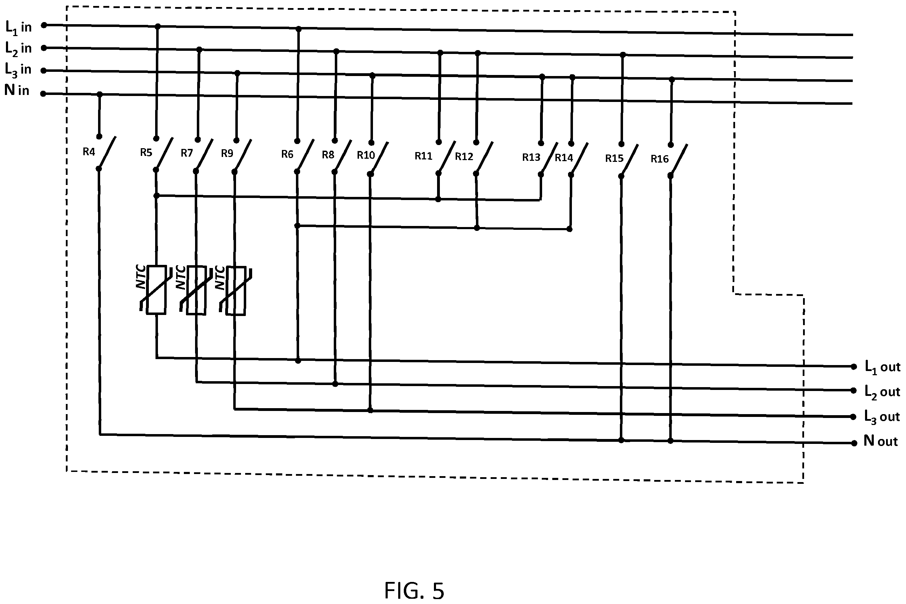

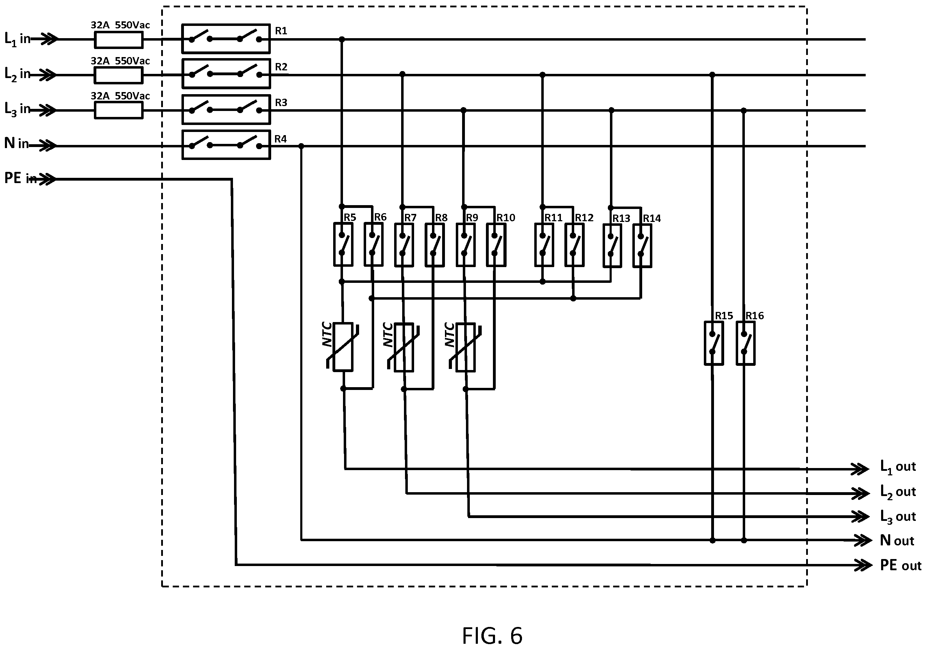

Figures 5 and 6 show specific embodiments of circuit configurations according to the invention, allowing phase specific disconnection from mains supply of a 3-phase network system, thereby allowing both one-phase and/or 3-phase charging of EVs. Phase specific disconnection implies user controlled or automatic disconnection of one or 3-phase loads from the 3-phase network system by operating one or more relays. The circuits and components within the stippled frames in the figures are preferably integrated into an EVSE unit. By distributing relays into a matrix as indicated in the figures a dynamic distribution of available power between randomly positioned EVs is possible both for 3-phase and 1-phase charging. Further, a 3-phase charging system may decide whether or not an EV should charge on one-phase or 3-phase, depending on available power within the grid. One of the advantages of the dynamic distribution of power is the fact that a typical EV is not able to charge with a current of less than 6 A, independently on number of phases. The minimum power per EV for 3-phase charging is significantly more than 6 A, thus limiting the number of simultaneous EV charging. When required current is available on one of the phases in the 3-phase system according to the invention, an EV connected to one of the EVSE's is automatically connected to that phase.

The present invention is defined by a 3-phase charging assembly for optimal use of available electrical power when charging EV's. The assembly comprises a main distribution cable supplying power by means of subsidiary isolated conductors for each phase (L₁ in, L₂ in, L₃ in) and a neutral conductor (Nin). It further comprises at least one electric vehicle supply equipment, EVSE's, each with internal circuitry with an input electrically connected to one or more of the subsidiary isolated conductors (L₁ in, L₂ in, L₃ in) of said main distribution cable, and an output (L₁ out, L₂ out, L₃ out) electrically connectible to at least one EV for providing power for charging.

Each EVSE comprises a plurality of primary relays (R5, R7, R9) configured to connect or disconnect electrical power provided by the conductors for each phase (L₁ in, L₂ in, L₃ in) at the input.

Each EVSE further comprises plurality of secondary relays (R6, R8, R10 - R16) configured in a relay matrix for enabling re-routing of each of the output conductors (L₁ out, L₂ out, L₃ out) to any phase (L₁ in, L₂ in, L₃ in) at the input.

The primary relays (R5, R7, R9) are preferably non-latching relays, and the secondary relays (R6, R8, R10 - R16) are latching relays.

Each EVSE further comprises a control system comprising communication means, wherein the control system is configured to connect or disconnect each of said primary and secondary relays (R5 - R16) and to transmit and receive relay status information to and from other EVSE's. This information can be communicated between each EVSE, at least between EVSE's connected to same one phase subsidiary circuit, and/or via devices connected to Internet.

The method according to the invention for charging electrical vehicles, EV's, with optimal utilization of available electrical power comprises several steps. The first steps are to provide a main distribution cable supplying power by means of subsidiary isolated conductors for each phase (L₁ in, L₂ in, L₃ in) and a neutral conductor (N in). Further to provide at least one electric vehicle supply equipment, EVSE's, each with internal circuitry with an input electrically connected to one or more of the subsidiary isolated conductors (L₁ in, L₂ in, L₃ in) of said main distribution cable, and an output (L₁ out, L₂ out, L₃ out) electrically connectible to at least one EV for providing power for charging.

The next step of the method is to provide each EVSE with a plurality of primary relays (R5, R7, R9) which are configured to connect or disconnect electrical power provided by the conductors for each phase (L₁ in, L₂ in, L₃ in) at the input. Further to provide each EVSE with a plurality of secondary relays (R6, R8, R10 - R16) which are configured in a relay matrix for enabling re-routing of each of the output conductors (L₁ out, L₂ out, L₃ out) to any phase (L₁ in, L₂ in, L₃ in) at the input, and to provide each EVSE with a control system comprising communication means, wherein the control system is configured to connect or disconnect each of said primary and secondary relays (R5 - R16) and to transmit and receive relay status information to and from other EVSE's.

The last enabling step of the inventive method is to connect at least one EV to the output conductors (L₁ out, L₂ out, L₃ out) of at least one EVSE. In one embodiment several EV's are connected to a plurality of EVSE's.

The inventive 3-phase charging assembly is further employing a method for mounting, quality assuring, registering and if relevant RFID encryption activating dedicated plugs / power points prior to EVSE installation. This should preferably be performed by qualified personnel, and the result may be reported using a computer program installed on a device with internet access, for example a mobile app, including information such as Internet date, GPS localization, name of installation contractor and relay value (e.g. 32 A, 64 A, etc.).

In an embodiment of the invention the network system works for both IT and TN networks having phase-to-phase voltages of 230 V and 400 V respectively in order to ensure high flexibility. Further, is it often considered beneficial to upgrade the network from a 230 V IT network to a 400 V TN network. In a similar way, a configuration also including a TT network is feasible.

Figure 5 shows one embodiment of the invention with an electrical circuit comprising at least one primary relay (R5, R7, R9) and at least one overcurrent protector, e.g. thyristors such as NTC, that is connected between each phase conductors (L₁ in, L₂ in, L₃ in) of the 3-phase network system and a 1- or 3-phase power outlet, representing a standard electrical line of a 3-phase system. Further, a conductor with at least one relay (R4) is connected between the neutral input conductor (N in) and the neutral outlet (N out) of the standard electrical line. This configuration ensures that all types of charger system may be connected to the 3-phase system.

In order to enable user controlled or automatic connection and disconnection from the network system, additional electrical lines with relays may be added. More specifically, nine additional electrical lines with associated secondary relays (R6, R8, R10 - R16) are connected to the phase conductors (L₁ in, L₂ in, L₃ in) as shown in figure 5. Three of the additional electrical lines (R6, R8, R10) are connected from each of the phase conductors (L₁ in, L₂ in, L₃ in) of the mains supply to corresponding phase conductors of the standard electrical line bridging their relays (R5, R7, R9).

Two additional electrical lines (R11 - R12) are connected from phase 2 conductor (L₂ in) to phase 1 of the standard electrical line and phase 1 of the additional electrical line, respectively, bridging their relays. Two additional electrical lines (R13 - R14) are connected from phase 3 conductor (L₃ in) to phase 1 standard electrical line and phase 1 additional electrical line, respectively, bridging their relays. Two additional electrical lines (R15 - R16) are connected to the neutral conductor from phase 2 conductor (L₂ in) and phase 3 conductor (L₃ in), respectively, bridging its relay.

Figure 6 shows another embodiment of the invention with an example of a circuit configuration enabling both 3-phase disconnection, provided by power relays (R₁ - R₃) on each phase conductor (L₁ in, L₂ in, L₃ in), and one-phase disconnection of loads from the mains supply as explained above with reference to figure 5. The circuit configuration further supports load balancing during and after one-phase connection or disconnection. The circuit configuration is similar to that of figure 5, but the circuit further supports all earthing systems, i.e. TT, TN and IT. Fuses are further provided on each input phase conductor (L₁ in, L₂ in, L₃ in). A standard electrical line with at least one relay (R4) is connected between a neutral (N in) input conductor and a neutral outlet (N out) of the EVSE. Overcurrent protectors are connected in series with at least one primary relay (R5, R7, R9). The figure also shows a separate communication line (PE in, PE out), for communicating with EVSE's, running parallel to conventional power lines.

All necessary relays, as well as any other electrical components not part of the 3-phase charging assembly such as overcurrent protectors, are preferably integrated into respective EVSEs. As mentioned above the relays may be a combination of conventional non-latching relays and latching relays, the latter being advantageous for the matrix part of the circuit configuration since these types uses no power once they are set in a desired position, for example by an electrical impulse. Note that the EVSE-unit should preferably use non-latching relays due to fulfillment of safety regulations.

In many jurisdictions an EVSE-unit must be able to disconnect from a power supply rapidly, also when no power is available. In these cases non-latching relays are the preferred choice since latching relays need power in order to change their state.

A latching relay normally has internal magnet(s) holding the switches of a relay in a set position. Only a short pulse is necessary for switching a latching relay from one state to another, e.g. from on to off, thereby saving energy by not requiring a continuously powered coil. Some latching relays have two coils, one for setting and one for resetting, some only have one coil and rely on power polarity reversals to set and reset the relay. Latching relays maintains its state after being actuated. It has no default position and remains in its last set position when drive current stops flowing, thereby reducing energy.

According to the invention, one key element enabling optimal and dynamic load distribution when charging electrical vehicles in a 3-phase charging assembly is the control system with communication means comprised in the EVSE's enabling seamless flow of data between each EVSE and a control unit. Based on measured load data, the control system in an EVSE controls connection or disconnection of the primary and secondary relays to (R5 - R16) such that best possible load balance between each phase of the 3-phase power supply is achieved.

According to one embodiment of the invention, the 3-phase power charging assembly further comprises external communication means allowing external communicating of data between the control systems comprised in each of the EVSE's.

External communication may in one embodiment be performed by means of power line communication (PLC) allowing communicating of data between the control systems comprised in each of the at least one EVSE and an external device. Communication between EVSE's and external devices may be performed wirelessly or by wire by using known methods in the field. An external data handling device may contain pre-registered information identifying which of the plurality of one phase subsidiary circuits each EVSE is connected to, e.g. through an associated one phase fuse. An external data handling device may further contain information concerning at least one of the physical location of each EVSE, identification of the person installing each EVSE, and date of installation.

When setting up a complete 3-phase charging assembly in accordance with the invention the following details concerning the communication between the individual EVSE's and control unit should be taken into consideration:
- One or more of the EVSEs preferably comprise means for communicating with nearby EVSEs, in particular if they are located at the same sub-circuit, i.e. sharing the same fuse.
- The communication may be performed locally between the EVSEs, for example by use of a dedicated master, and/or via the Internet. The latter communication is considered most preferably and may involve cloud based identification with an associated coupling and control system.
- If the communication is Internet based, the charging assembly preferably contains predefined data for each of the positions of the EVSEs as function of the sub-circuit and its associated fuse value. In this way the control system may, at any time, have knowledge of the electrical and physical configuration of the assembly.
- It is also useful to record the exact physical position of each EVSEs, as well as registering service technician ID, date, etc. in view of possible system maintenance and/or qualification/re-qualification for approval purposes.
- The charging assembly should preferably have the possibility of overriding (i.e. changing the power consumption), for example when the local grid supplying power has a reduced amount of available power or if the main fuse is overloaded. This may be done automatically by monitoring devices within the grid or within fuse boxes over the Internet and/or local network. The monitoring may apply known technology such as Systems for Automatic Power Consumption Measurements (AMS systems).
- The communication may be performed by power line communication (PLC), serial communication line (such as RS485, RS422 or RS232) and/or wirelessly, e.g. WiFi, Bluetooth, Bluetooth Low Energy, Zig-Bee, Z-wave, etc.

In one embodiment of the invention a specific EVSE is configured to operate as a master unit controlling the communication of data to and from the other communication means. Based on received data, comprising at least relay status, from other identified EVSE's connected to the same power distribution cable, a master unit will process the data and send specific instructions to the control systems in each of the other EVSE's. Based on the result of the processed data, the master unit will decide the optimal use of available electrical power when charging electrical vehicles by means of said EVSE's. The control system in each EVSE will receive the instructions, and if relevant, re-route one or more phases of the output connector to any phase at the input connector, i.e. one or more output conductors (L₁ out, L₂ out, L₃ out) is connected to any phase (L₁ in, L₂ in, L₃ in) at the input of the EVSE by connecting or disconnecting each of said primary and secondary relays (R5 - R16) in the EVSE's.

In another embodiment of the invention an external device, other than an EVSE, may operate as a master unit for controlling communication of data to and from the at least one EVSE's.

In one embodiment each EVSE's comprises means for measuring three-phase power consumption and current load, and is configured to transmit this information together with its relay status and ID. This information will be sent to a master unit and provide basis for re-routing of each of the output conductors (L₁ out, L₂ out, L₃ out) in the at least one EVSE to any phase (L₁ in, L₂ in, L₃ in) of the 3-phase power supply. Current load information from all EVSE's comprised in the same assembly will be transmitted to and assessed by the master unit providing the basis for optimal load balance and utilization of available power from each phase of the 3-phase power supply.

In one embodiment of the invention the means for measuring current load is mounted to the main distribution cable delivering power to the at least one EVSE, and where this information is transmitted from a master unit, comprised in external communication means or power line communication means, to the at least one EVSE.

This configuration is favourable when only one EVSE is used in the 3-phase charging assembly according to the invention. This may be the case in a private home installation having a 3-phase mains power supply. Different electric appliances in a house may be connected to different phases of the power supply loading the phases differently at different times of a day. Power available for a specific phase for charging an EV may thus be limited when charging is to take place. If an EV is connected to a specific phase without knowing the power already drawn from that phase, the main fuse may blow.

According to one embodiment of the invention, a current meter, installed after the main fuse, for measuring instantaneous current running in each phase will provide information on which of the phases having the best capacity at the time. This may be performed by an AMS meter. The measurement data will be transmitted to the control system in the EVSE and will provide the basis for which phase to connect to. The data may be transmitted to the EVSE by means of power line communication or wirelessly. This may be a dynamic process ensuring that the EVSE always is connected to the phase having the best capacity.

This is an example of an installation according to the invention with only one EVSE installed, e.g. at a private house, cabin, or smaller companies, for providing optimal use of available electrical power when charging electrical vehicles.

The full potential of the invention is however realised when several EVSE are comprised in an installation according to the invention.

All data, including power available for charging, current load of the different phases of a 3-phase power supply, time frames where charging can be performed, power consumption of EV's being charged etc., is defined in an energy distribution algorithm making the basis for how each EVSE is controlled, i.e. when can the EVSE be used for charging, how much power is available, which phase to connect to etc.

The above described 3-phase charging system may preferably allow automatic handling of charging based on available information, whether or not to charge EVs, as well as which EVs to receive additional power for heating and defrosting, for example prior to departure, and/or provide distribution and prioritizing of available power being required for this particular purpose.

In particular when a maximum power is drawn from the network during charging of many EVs it may be advantageous to use time sharing protocols. These protocols may be automatically activated if the number of connected EVs exceeds the maximum number of EVs possible in proportion to the minimum allowable charging power per EV.

By measuring both resistive current and reactive current prior and/or during charging, the 3-phase charging assembly allows an automatic estimation of whether or not an EV should have a charging current that exceed the normal minimum charging current prior to initiating charging.

A "finger-print" of an EV can be registered based on at least one of:
- the time before impact of a relay,
- the time before start of the charging itself, the ramp-up time until the charging power is achieved,
- the response time during change of power level (e.g. from change of PWM signal to EV),
- reactive current at different charging power and
- difference in reactive current at one-phase and, if relevant, 3-phase charging.

When the "finger-print" is registered, it is possible to further assess, or even decide, the type and model of a connected EV, thus allowing technical adjustment of the charging progress.

Surveillance of power consumption as function of available power, either locally in accordance with a fuse value or adjusted to the value from a local AMS gauge or a combination thereof, is possible by a solution using cloud storage.

The 3-phase charging assembly preferably also allows decrease or increase of charging power between some or all of the EVSEs by a manual or automated cloud storage service. Such adjustment of charging power may be performed by any parties such as the supplier of the EVSE, the electricity plant, the caretaker of the building, etc. The adjustments represent an efficient way of avoiding overcharge further down the grid, e.g. in transformer stations etc., and/or regulating with regards to network charge or maximum power supplied to buildings, parking garages, etc.

According to the invention both required safety functions and phase distribution for providing load balance is fully realized.

Additional charging stations provided with EVSE's according to the invention can be added to the 3-phase power supply of existing charging stations without any needed modifications, making the system cost efficient and flexible. No human interaction is required for setting up and maintaining optimal use of available electrical power when charging several electrical vehicles. In practice different vehicles requiring different power and time period for being charged will be connected and disconnected to/from the 3-phase distribution cable/line. The inventive charging assembly will automatically and seamlessly instruct the control system in each EVSE, included in the assembly, to connect or switch to a specific phase, how much power it may pull from that phase etc. This will be performed continuously based on assessments of current load on the different phases of the 3-phase power supply, time of day, allocated power provided to a plurality of EVSE's at the time etc.

In the preceding description, various aspects of the assembly according to the invention have been described with reference to illustrative embodiments. For purposes of explanation, specific numbers, systems and configurations were set forth in order to provide a thorough understanding of the apparatus and its workings. However, this description is not intended to be construed in a limiting sense. Various modifications and variations of the illustrative embodiment, as well as other embodiments of the apparatus, which are apparent to persons skilled in the art to which the disclosed subject matter pertains, are deemed to lie within the scope of the present invention.

## Claims

1. A 3-phase charging assembly for charging electrical vehicles, EV's, comprising:
- a 3-phase distribution cable supplying power by means of subsidiary isolated conductors for each phase L_{1 in}, L_{2 in}, L_{3 in} and a neutral conductor N ᵢₙ,
- at least one electric vehicle supply equipment, EVSE, each comprising internal circuitry with an input electrically connected to one or more of the subsidiary isolated conductors L₁ in, L₂ in, L₃ in, N ᵢₙ of said 3-phase distribution cable, and an output L₁ out, L₂ out, L₃ out, N ₒᵤₜ electrically connectible to at least one EV for providing power for charging,
**characterized in that** each EVSE further comprises:
- primary relays R5, R7, R9 each configured to connect or disconnect electrical power provided by the conductors for each phase L₁ in, L₂ in, L₃ in at the input to respective output L₁ out, L₂ out, L₃ out, where at least one overcurrent protector is connected in series with each primary relay R5, R7, R9,
- secondary relays R6, R8, R10 - R16, where relays R6, R8, R10 are connected between L_{1 in}, L_{2 in}, L_{3 in} and L₁ out, L₂ out, L₃ out respectively, and where secondary relays R11 - R14 enable routing of a 1-phase load at the output L_{1 out} to phases L₂ in, L₃ in at the input, **in that** one relay R11 is connected from phase 2 conductor L₂ in at the input to the overcurrent protector connected to R5, one secondary relay R12 is connected from phase 2 conductor L₂ in a the input to phase 1 conductor L_{1 out} at the output, secondary relay R13 is connected from phase 3 conductor L₃ in at the input to the overcurrent protector connected to R5, one secondary relay R14 is connected from phase 3 conductor L_{3 in} at the input to phase 1 conductor L_{1 out} at the output, secondary relays R15 - R16 are connected to a neutral conductor N ₒᵤₜ output from phase 2 conductor L₂ in and phase 3 conductor L_{3 in}, respectively, and at least one relay R4 is connected between a neutral N in input conductor and the neutral N ₒᵤₜ output,
- a control system comprising communication means, wherein the control system is configured to connect or disconnect each of said primary relays R5, R7, R9, and secondary relays R6, R8, R10 - 16 according to capacity and current load detected on the phases and to transmit and receive relay status information to and from the EVSE.

2. The 3-phase charging assembly according to claim 1,
**characterized in** further comprising power relays R1 - R3 on each phase conductor L_{1 in}, L_{2 in}, L_{3 in}.

3. The 3-phase charging assembly according to claim 1 or 2,
**characterized in** further comprising fuses on each input phase conductor L_{1 in}, L_{2 in}, L_{3 in}.

4. The 3-phase charging assembly according to any one of the preceding claims,
**characterized in that** the primary relays R5, R7, R9 are non-latching relays, and the secondary relays R6, R8, R10 - R16 are latching relays.

5. The 3-phase charging assembly according to any one of the claims 1 - 4,
**characterized in** further comprising external communication means allowing communicating of data between the control systems comprised in each EVSE.

6. The 3-phase charging assembly according to any one of claims 1 - 4,
**characterized in** further comprising power line communication, PLC, by means of a control unit, allowing communicating of data between the control systems comprised in each EVSE.

7. The 3-phase charging assembly according to any one of the preceding claims, **characterized in that** an EVSE is configured to operate as a master unit controlling the communication of data to and from EVSE's or other communication means comprised in the same 3-phase charging assembly by processing received data, comprising at least relay status, from the EVSE's and send specific instructions to a control system in each of the other EVSE's for controlling routing of output phases to input phases in each EVSE by connecting and disconnecting each of the primary and secondary relays in the EVSE's.

8. The 3-phase charging assembly according to claim 5 or 6,
**characterized in that** the external communication means or power line communication means is configured to operate as a master unit controlling communication of data to and from the at least one EVSE.

9. The 3-phase charging assembly according to claim 7 or 8,
**characterized in that** the master unit is configured to control the of the 1-phase load at the output L_{1 out} to any phase L₁ in, L₂ in, L₃ in at the input of EVSE's comprised in the same 3-phase charging assembly, by transmitting instructions to the control system in the EVSE's.

10. The 3-phase charging assembly according to any one of the preceding claims, **characterized in** comprising means for measuring current load on each phase of the electrical lines of the 3-phase distribution cable and where this information is used for performing load balance of available power by connecting and disconnecting each of the primary and secondary relays in the EVSE's.

11. The 3-phase charging assembly according claim 10,
**characterized in that** the at least one EVSE comprises means for measuring current load on each phase of its electrical input lines L₁ in, L₂ in, L₃ in connected to the 3-phase distribution cable, and where this information is used for performing load balance of available power.

12. The 3-phase charging assembly according to claim 7 or 8,
**characterized in that** the master unit is configured to receive load data from other devices connected to, and drawing power from the same 3-phase distribution cable providing power to EVSE's, where said load data defines current load on each phase L₁ in, L₂ in, L₃ in.

## Patentansprüche

1. Dreiphasen-Ladeanordnung zum Laden von Elektrofahrzeugen, EVs, umfassend:
- ein Dreiphasen-Verteilerkabel, das Strom mit Hilfe von isolierten Nebenleitern für jede Phase L_{1 in}, L_{2 in}, L_{3 in} und einem Neutralleiter N ᵢₙ liefert,
- mindestens eine Versorgungseinrichtung für Elektrofahrzeuge (Electric Vehicle Supply Equipment, EVSE), die jeweils eine interne Schaltung mit einem Eingang, der elektrisch mit einem oder mehreren der isolierten Hilfsleiter L_{1 in}, L_{2 in}, L_{3 in}, N ᵢₙ des Dreiphasen-Verteilerkabels verbunden ist, und einen Ausgang L_{1 out}, L_{2 out}, L_{3 out}, N ₒᵤₜ umfasst, der elektrisch mit mindestens einem Elektrofahrzeug verbindbar ist, um Strom zum Laden bereitzustellen,
**dadurch gekennzeichnet, dass** jede EVSE des Weiteren umfasst:
- Primärrelais R5, R7, R9, die jeweils dazu konfiguriert sind, elektrische Leistung, die von den Leitern für jede Phase L_{1 in}, L_{2 in}, L_{3 in} am Eingang bereitgestellt wird, mit dem jeweiligen Ausgang L_{1 out}, L_{2 out}, L_{3 out} zu verbinden oder davon zu trennen, wobei mindestens ein Überstromschutz mit jedem Primärrelais R5, R7, R9 in Reihe geschaltet ist,
- Sekundärrelais R6, R8, R10 - R16, wobei die Relais R6, R8, R10 zwischen L_{1 in}, L_{2 in}, L_{3 in} bzw. L_{1 out}, L_{2 out}, L_{3 out} verbunden sind, und wobei die Sekundärrelais R11 - R14 die Leitweglenkung einer einphasigen Last am Ausgang L_{1 out} zu den PhasenL_{2 in}, L_{3 in} am Eingang ermöglichen, dadurch, dass ein Relais R11 vom Leiter L_{2 in} der Phase 2 am Eingang mit dem an R5 angeschlossenen Überstromschutz verbunden ist, ein Sekundärrelais R12 vom Leiter L_{2 in} der Phase 2 am Eingang mit dem Leiter L_{1 out} der Phase 1 am Ausgang verbunden ist, ein Sekundärrelais R 13 vom Leiter L_{3 in} der Phase 3 am Eingang mit dem Überstromschutz verbunden ist, der mit R5 verbunden ist, ein Sekundärrelais R14 vom Leiter L_{3 in} der Phase 3 am Eingang mit dem Leiter L_{1 out} der Phase 1 am Ausgang verbunden ist, die Sekundärrelais R15 - R16 mit dem Ausgang N ₒᵤₜ des Neutralleiters vom Leiter L_{2 in} der Phase 2 bzw. vom Leiter L_{3 in} der Phase 3 verbunden sind, und mindestens ein Relais R4 zwischen einem Eingang N ᵢₙ des Neutralleiters und dem Ausgang N ₒᵤₜ des Neutralleiters verbunden ist,
- ein Steuerungssystem, das Kommunikationsmittel umfasst, wobei das Steuerungssystem dazu konfiguriert ist, jedes der Primärrelais R5, R7, R9 und der Sekundärrelais R6, R8, R10-16 entsprechend der auf den Phasen ermittelten Kapazität und Stromlast zu verbinden oder zu trennen und Relaisstatusinformationen an die EVSE zu senden und von ihr zu empfangen.

2. Dreiphasen-Ladeanordnung nach Anspruch 1,
**dadurch gekennzeichnet, dass** sie ferner Leistungsrelais R1 - R3 an jedem Phasenleiter L_{1 in}, L_{2 in}, L_{3 in} umfasst.

3. Dreiphasen-Ladeanordnung nach Anspruch 1 oder 2,
**dadurch gekennzeichnet, dass** sie ferner Sicherungen an jedem Eingangsphasenleiter L_{1 in}, L_{2 in}, L_{3 in} umfasst.

4. Dreiphasen-Ladeanordnung nach einem der vorhergehenden Ansprüche,
**dadurch gekennzeichnet, dass** die Primärrelais R5, R7, R9 nicht selbsthaltende Relais sind und die Sekundärrelais R6, R8, R10 - R16 selbsthaltende Relais sind.

5. Dreiphasen-Ladeanordnung nach einem der Ansprüche 1-4,
**dadurch gekennzeichnet, dass** sie ferner externe Kommunikationsmittel umfasst, die die Kommunikation von Daten zwischen den in jeder EVSE enthaltenen Steuerungssystemen ermöglichen.

6. Dreiphasen-Ladeanordnung nach einem der Ansprüche 1-4,
**dadurch gekennzeichnet, dass** sie ferner eine Stromleitungskommunikation (Power Line Communication, PLC) mittels einer Steuereinheit umfasst, die die Kommunikation von Daten zwischen den in jeder EVSE enthaltenen Steuerungssystemen ermöglicht.

7. Dreiphasen-Ladeanordnung nach einem der vorhergehenden Ansprüche,
**dadurch gekennzeichnet, dass** eine EVSE dazu konfiguriert ist, als Haupteinheit zu arbeiten, die die Kommunikation von Daten zu und von EVSEs oder anderen Kommunikationsmitteln steuert, die in derselben Dreiphasen-Ladeanordnung enthalten sind, indem sie empfangene Daten, die zumindest den Relaisstatus umfassen, von den EVSEs verarbeitet und spezifische Anweisungen an ein Steuerungssystem in jeder der anderen EVSEs sendet, um die Leitweglenkung von Ausgangsphasen zu Eingangsphasen in jeder EVSE zu steuern, indem sie jedes der Primär- und Sekundärrelais in den EVSEs verbindet und trennt.

8. Dreiphasen-Ladeanordnung nach Anspruch 5 oder 6,
**dadurch gekennzeichnet, dass** das externe Kommunikationsmittel oder das Stromleitungskommunikationsmittel dazu konfiguriert ist, als Haupteinheit zu arbeiten, die die Kommunikation von Daten zu und von der mindestens einen EVSE steuert.

9. Dreiphasen-Ladeanordnung nach Anspruch 7 oder 8,
**dadurch gekennzeichnet, dass** die Haupteinheit dazu konfiguriert ist, die einphasige Last am Ausgang L_{1 out} auf eine beliebige Phase L_{1 in}, L_{2 in}, L_{3 in} am Eingang von EVSEs zu steuern, die in derselben Dreiphasen-Ladeanordnung enthalten sind, indem sie Anweisungen an das Steuerungssystem in den EVSEs überträgt.

10. Dreiphasen-Ladeanordnung nach einem der vorhergehenden Ansprüche, **dadurch gekennzeichnet, dass** sie Mittel zur Messung der Stromlast an jeder Phase der elektrischen Leitungen des Dreiphasen-Verteilerkabels umfasst, und wobei diese Informationen zur Durchführung des Lastausgleichs der verfügbaren Leistung durch Verbinden und Trennen jedes der Primär- und Sekundärrelais in den EVSEs verwendet werden.

11. Dreiphasen-Ladeanordnung nach Anspruch 10,
**dadurch gekennzeichnet, dass** die mindestens eine EVSE Mittel zum Messen der Stromlast an jeder Phase ihrer elektrischen Eingangsleitungen L_{1 in}, L_{2 in}, L_{3 in}, die mit dem Dreiphasen-Verteilerkabel verbunden sind, umfasst, und wobei diese Information zur Durchführung des Lastausgleichs der verfügbaren Leistung verwendet wird.

12. Dreiphasen-Ladeanordnung nach Anspruch 7 oder 8,
**dadurch gekennzeichnet, dass** die Haupteinheit dazu konfiguriert ist, Lastdaten von anderen Vorrichtungen zu empfangen, die an dasselbe Dreiphasen-Verteilerkabel angeschlossen sind und von diesem Strom beziehen, das die EVSEs mit Strom versorgt, wobei die Lastdaten die Stromlast an jeder Phase L_{1 in}, L_{2 in}, L_{3 in} definieren.

## Revendications

1. Ensemble de charge triphasé pour charger des véhicules électriques, EV, comprenant :
- un câble de distribution triphasé pour l'alimentation en énergie au moyen de conducteurs isolés auxiliaires pour chaque phase L_{1 in}, L_{2 in}, L_{3 in} et un conducteur neutre N ᵢₙ,
- au moins un équipement d'alimentation de véhicule électrique, EVSE, chacun comprenant des circuits internes avec une entrée électriquement connectée à un ou plusieurs des conducteurs isolés auxiliaires L_{1 in}, L_{2 in}, L_{3 in}, N ᵢₙ, dudit câble de distribution triphasé, et une sortie Liout, L_{2 out}, L_{3 out}, N ₒᵤₜ pouvant être électriquement connectée à au moins un EV pour fournir de l'énergie à des fins de charge,
**caractérisé en ce que** chaque EVSE comprend en outre :
- des relais primaires R5, R7, R9 configurés chacun pour connecter ou déconnecter l'énergie électrique fournie par les conducteurs pour chaque phase L_{1 in}, L_{2 in}, L_{3 in} au niveau de l'entrée à une sortie respective L_{1 out}, L_{2 out}, L_{3 out}, où au moins un protecteur contre les surintensités est connecté en série avec chaque relais primaire R5, R7, R9,
- des relais secondaires R6, R8, R10 à R16, où les relais R6, R8, R10 sont connectés entre L_{1 in}, L_{2 in}, L_{3 in} et L_{1 out}, L_{2 out}, L_{3 out} respectivement, et où les relais secondaires R11 à R14 permettent l'acheminement d'une charge de phase 1 au niveau de la sortie L_{1 out} vers les phases L_{2 in}, L_{3 in} au niveau de l'entrée, **en ce qu'**un relais R11 est connecté depuis le conducteur de phase 2 L_{2 in} au niveau de l'entrée au protecteur contre les surintensités connecté à R5, un relais secondaire R12 est connecté depuis le conducteur de phase 2 L_{2 in} au niveau de l'entrée au conducteur de phase 1 L_{1 out} au niveau de la sortie, un relais secondaire R13 est connecté depuis le conducteur de phase 3 L_{3 in} au niveau de l'entrée au protecteur contre les surintensités connecté à R5, un relais secondaire R14 est connecté depuis le conducteur de phase 3 L_{3 in} au niveau de l'entrée au conducteur de phase 1 L_{1 out} au niveau de la sortie, les relais secondaires R15 à R16 sont connectés à une sortie de conducteur neutre N ₒᵤₜ depuis le conducteur de phase 2 L_{2 in} et le conducteur de phase 3 L_{3 in}, respectivement, et au moins un relais R4 est connecté entre un conducteur d'entrée neutre N ᵢₙ et la sortie neutre N ₒᵤₜ,
- un système de commande comprenant un moyen de communication, le système de commande étant configuré pour connecter ou déconnecter chacun desdits relais primaires R5, R7, R9, et des relais secondaires R6, R8, R10 à R16 en fonction de la capacité et de la charge de courant détectées sur les phases et pour transmettre à et recevoir depuis l'EVSE des informations d'état de relais.

2. Ensemble de charge triphasé selon la revendication 1,
**caractérisé en ce qu'**il comprend en outre des relais d'alimentation R1 à R3 sur chaque conducteur de phase L_{1 in}, L_{2 in}, L_{3 in}.

3. Ensemble de charge triphasé selon la revendication 1 ou 2,
**caractérisé en ce qu'**il comprend en outre des fusibles sur chaque conducteur de phase d'entrée L_{1 in}, L_{2 in}, L_{3 in}.

4. Ensemble de charge triphasé selon l'une quelconque des revendications précédentes,
**caractérisé en ce que** les relais primaires R5, R7, R9 sont des relais sans verrouillage, et les relais secondaires R6, R8, R10 à R16 sont des relais à verrouillage.

5. Ensemble de charge triphasé selon l'une quelconque des revendications 1 à 4,
**caractérisé en ce qu'**il comprend en outre des moyens de communication externes permettant la communication de données entre les systèmes de commande compris dans chaque EVSE.

6. Ensemble de charge triphasé selon l'une quelconque des revendications 1 à 4,
**caractérisé en ce qu'**il comprend en outre une communication de ligne d'alimentation, PLC, au moyen d'une unité de commande, permettant la communication de données entre les systèmes de commande compris dans chaque EVSE.

7. Ensemble de charge triphasé selon l'une quelconque des revendications précédentes,
**caractérisé en ce qu'**un EVSE est configuré pour fonctionner comme unité maîtresse commandant la communication de données à et depuis des EVSE ou d'autres moyens de communication compris dans le même ensemble de charge triphasé par traitement de données reçues, comprenant au moins l'état de relais, depuis les EVSE et envoyer des instructions spécifiques à un système de commande dans chacun des autres EVSE pour commander l'acheminement de phases de sorties à des phases d'entrée dans chaque EVSE en connectant et déconnectant chacun des relais primaires et secondaires dans les EVSE.

8. Ensemble de charge triphasé selon la revendication 5 ou 6,
**caractérisé en ce que** les moyens de communication externes ou moyens de communication par ligne d'alimentation sont configurés pour fonctionner en tant qu'unité maîtresse commandant la communication de données à et depuis l'au moins un EVSE.

9. Ensemble de charge triphasé selon la revendication 7 ou 8,
**caractérisé en ce que** l'unité maîtresse est configurée pour commander la de charge de phase 1 au niveau de la sortie L_{1 out} à une quelconque phase L_{1 in}, L_{2 in}, L_{3 in} au niveau de l'entrée des EVSE comprise dans le même ensemble de charge triphasé, en transmettant des instructions au système de commande dans les EVSE.

10. Ensemble de charge triphasé selon l'une quelconque des revendications précédentes,
**caractérisé en ce qu'**il comprend des moyens pour mesurer une charge de courant sur chaque phase des lignes électriques du câble de distribution triphasé et où cette information est utilisée pour réaliser un équilibre de charge d'énergie disponible en connectant et déconnectant chacun des relais primaires et secondaires dans les EVSE.

11. Ensemble de charge triphasé selon la revendication 10,
**caractérisé en ce que** l'au moins un EVSE comprend des moyens pour mesurer une charge de courant sur chaque phase de ses lignes d'entrée électriques L_{1 in}, L_{2 in}, L_{3 in} connectées au câble de distribution triphasé, et où cette information est utilisée pour réaliser un équilibre de charge d'énergie disponible.

12. Ensemble de charge triphasé selon la revendication 7 ou 8,
**caractérisé en ce que** l'unité maîtresse est configurée pour recevoir des données de charge provenant d'autres dispositifs connectés au, et débiter de l'énergie depuis le, même câble de distribution triphasé fournissant de l'énergie aux EVSE, où lesdites données de charge définissent la charge de courant sur chaque phase L_{1 in}, L_{2 in}, L_{3 in}.
